# EUROPEAN PATENT APPLICATION

(11) **EP 2 690 265 A1**
(43) Date of publication of application: **29.01.2014**
(21) Application number: 13177579.3
(22) Date of filing: 23.07.2013
(51) Int. Cl.: F01N 3/20

(54) **Method of operating a selective catalytic reduction (scr) assembly, and assembly therefor**

(30) Priority: 25.07.2012 US 201261675614 P; 18.07.2013 US 201313945252
(71) Applicant: TI Group Automotive Systems, L.L.C., Auburn Hills, MI 48326 (US)
(72) Inventor: Hersel, Walter B., 71229 Leonberg (DE)
(74) Representative: von Kreisler Selting Werner

(57) **Abstract**

A selective catalytic reduction (SCR) assembly (10), and method of operating the assembly, is described. In one example, the SCR assembly (10) includes an SCR line (12), a flow restrictor (14), and a pressure sensor (16). The SCR line (12) carries a reducing agent such as urea, and the flow restrictor (14) is located in the SCR line (12). The pressure sensor (16) senses the pressure of the reducing agent flowing through the SCR line (12), and the sensed pressure can be used to do one or more of the following: i) monitor the functionality of the SCR injector (18), ii) as one or more bases for controlling operation of an SCR fluid pump, and/or iii) determine a volume or volumetric flow rate of reducing agent that is ejected into an exhaust stream.

## Description

### Reference to Co-Pending Application

This application claims the benefit of U.S. Provisional Application No. 61/675,614 filed July 25, 2012, and U.S. Patent Application No. 13/945,252 filed July 18, 2013, which is incorporated herein by reference in its entirety.

### Technical Field

The present disclosure relates generally to selective catalytic reduction (SCR) exhaust treatment systems, and more particularly to operating methods and assemblies for SCR systems.

### Background

Automobiles with diesel engines are often equipped with a selective catalytic reduction (SCR) exhaust treatment system used to reduce the amount of nitrogen oxide (NOₓ) in the engine's exhaust stream. Generally, in an SCR system, a reducing agent such as urea is added to the engine's exhaust stream to cause a chemical reaction that converts NOₓ into nitrogen and water. Dosing injectors are commonly installed in the SCR systems to eject and spray the urea in the exhaust stream.

### Summary

A method of operating a selective catalytic reduction (SCR) assembly may include several steps. One step may be providing a flow restrictor in an SCR line of the SCR assembly. The flow restrictor may be located upstream of an SCR injector with respect to reducing agent fluid-flow direction in the SCR line. A pressure sensor at the SCR line may also be provided, and the pressure sensor may be located downstream of the flow restrictor and upstream of the SCR injector with respect to reducing agent fluid-flow direction in the SCR line. Another step may be sensing the pressure of the reducing agent in the SCR line with the pressure sensor when the SCR injector is actuated. Yet another step may be using the sensed pressure in order to monitor the functionality of the SCR injector.

A method of operating a selective catalytic reduction (SCR) assembly may include several steps. One step may be providing a flow restrictor in an SCR line of the SCR assembly. The flow restrictor may be located upstream of an SCR injector with respect to reducing agent fluid-flow direction in the SCR line. A pressure sensor at the SCR line may also be provided, and the pressure sensor may be located downstream of the flow restrictor and upstream of the SCR injector with respect to reducing agent fluid-flow direction in the SCR line. Another step may be sensing the pressure of the reducing agent in the SCR line with the pressure sensor when the SCR injector is actuated. Yet another step may include using the sensed pressure in order to determine a volume or volumetric flow rate of the reducing agent ejected out of the SCR injector when the SCR injector is actuated.

A method of operating a selective catalytic reduction (SCR) assembly may include several steps. One step may be providing a flow restrictor in an SCR line of the SCR assembly. The flow restrictor may be located upstream of an SCR injector with respect to reducing agent fluid-flow direction in the SCR line. A pressure sensor at the SCR line may also be provided, and the pressure sensor may be located downstream of the flow restrictor and upstream of the SCR injector with respect to reducing agent fluid-flow direction in the SCR line. Another step may be sensing the pressure of the reducing agent in the SCR line with the pressure sensor when the SCR injector is actuated. Yet another step may be using the sensed pressure as one or more basis/bases for controlling operation of an SCR fluid pump used to pressurize reducing agent in the SCR line.

A selective catalytic reduction (SCR) assembly may include an SCR line, a flow restrictor, and a pressure sensor. The SCR line may be constructed to carry reducing agent fluid-flow. The flow restrictor may be located in the SCR line. The pressure sensor may be located in the SCR line in order to sense the pressure of the reducing agent flowing through the SCR line. The pressure sensor may be positioned downstream of the flow restrictor with respect to reducing agent fluid-flow direction in the SCR line. During use of the SCR assembly, the sensed pressure may be used in order to detect a malfunctioned opening of an outlet of an SCR injector, detect the presence of an obstruction located downstream of the SCR injector, or to do both.

### Brief Description of the Drawings

The following detailed description of preferred embodiments and best mode will be set forth with reference to the accompanying drawings, in which:

FIG. 1 is a schematic of a selective catalytic reduction (SCR) assembly; and

FIG. 2 is a graph showing time (milliseconds) on the x-axis versus pressure (kilopascals) on the y-axis.

### Detailed Description of Preferred Embodiments

Referring in more detail to the drawings, a selective catalytic reduction (SCR) assembly 10 can be equipped in an automotive engine exhaust breathing system, such as a diesel engine exhaust breathing system, in order to assist in the reduction of nitrogen oxide (NOₓ) in the accompanying engine exhaust stream. Recent governmental regulations and directives enacted in the United States and Europe, among other possible countries and continents, dictate certain levels of control over the functionality of SCR exhaust treatment systems, particularly the functionality of SCR dosing injectors. The SCR assembly 10 and methods of operation described herein can meet at least some of these new regulations and directives by taking a pressure measurement in the SCR assembly and using the measurement to at least partly control operation of the SCR dosing injector, detect malfunctions with the injector, at least partly control operation of an SCR fluid pump, or any combination of these.

As an aside, although described in the context of automotive SCR exhaust treatment systems and with urea as the reducing agent or reductant, the SCR assembly 10 could be installed in non-automotive applications such as ships, off-road vehicles, locomotives, gas turbines, and others, and could employ other reducing agents such as anhydrous ammonia, aqueous ammonia, and others.

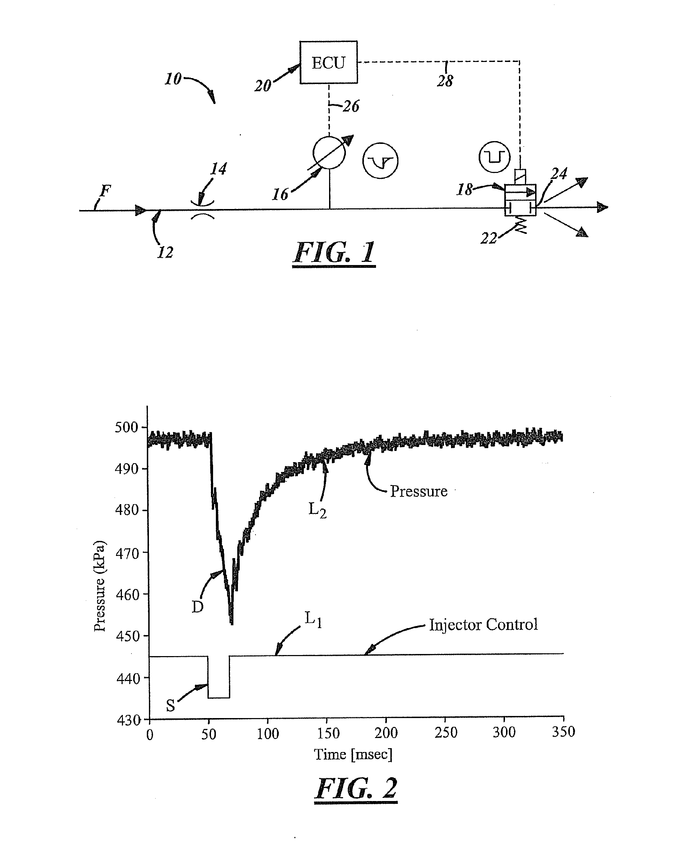

The SCR assembly 10 can be an installation in a larger SCR exhaust treatment system, and can be installed downstream of an SCR system tank that holds reducing agent fluid such as urea, and downstream of an SCR system fluid pump that draws the fluid out of the tank and pumps it through the SCR assembly to the engine exhaust stream. In some embodiments, the SCR assembly 10 is electrically coupled to an on-board diagnostics (OBD) system of the associated vehicle, and communicates data to the OBD system for self-diagnostic and reporting purposes. The SCR assembly 10 can have different designs, constructions, and components depending upon, among other considerations, its particular vehicle application. And the design and construction of some of the components of the SCR assembly 10 can be dictated by the intended and desired volume or volumetric flow rate of urea fluid to be ejected over a given duration; the intended and desired volume or volumetric flow rate may also influence the selected pressure supplied by the SCR fluid pump. In the embodiment of FIG. 1, for example, the SCR assembly 10 includes an SCR line 12, a flow restrictor 14, a pressure sensor 16, an SCR dosing injector 18, and an electronic control unit (ECU) 20.

The SCR line 12-also called a urea line-is constructed to house and carry urea fluid-flow from the SCR system tank and to the SCR dosing injector 18. As will be known to skilled artisans, the SCR line 12 could be fitted to and through other components along the way and therefore could be segmented into separate and discrete SCR lines throughout its extent. The flow restrictor 14 is placed in-line in the SCR line 12 and is positioned upstream of the pressure sensor 16 and upstream of the SCR dosing injector 18. As used herein, upstream and downstream refer to directions relative to a direction F of urea fluid-flow in the SCR line 12. The flow restrictor 14 can provide and serve as a restriction in the SCR line 12 to limit fluid-flow passing by and through it, such as an orifice or other structure or construction. The pressure sensor 16 takes a pressure measurement of the urea fluid-flow passing through the SCR line 12 at the place where the pressure sensor is located. In different embodiments, the pressure sensor 16 can have different designs and constructions, and can be of different types. In the embodiment of FIG. 1, the pressure sensor 16 can be an absolute pressure sensor that takes instantaneous and dynamic pressure measurements and electrically communicates this data to the ECU 20. Here, the pressure sensor 16 is installed in the SCR line 12 at a position downstream of the flow restrictor 14 and upstream of the SCR dosing injector 18. In other embodiments, the pressure sensor 16 can be a differential pressure sensor that, for example, takes pressure measurements inside the SCR line 12 and outside of the SCR line.

The SCR dosing injector 18 selectively ejects and sprays urea out of the SCR line 12 and into the engine exhaust stream. In different embodiments, the SCR dosing injector 18 can have different designs and constructions, and can be of different types. In the embodiment of FIG. 1, for example, the SCR dosing injector 18 fluidly communicates with the SCR line 12 and receives urea fluid from the SCR line. The SCR dosing injector 18 is positioned downstream of the pressure sensor 16 and downstream of the flow restrictor 14. The SCR dosing injector 18 can be installed at a terminal end of the SCR line 12. In operation, the SCR dosing injector 18 may include a solenoid operated valve that is actuated or energized between a closed state and an open state. In its normally closed state, a spring 22 biases a needle or other member to obstruct and block an outlet 24 so that no urea fluid is ejected out of the outlet. The SCR dosing injector 18 can be selectively actuated to its open state via commands from the ECU 20. When in the open state, the precise amount of urea fluid ejected into the engine exhaust stream can be produced and controlled in two or more ways. In one way, the amount of urea fluid ejected is based on the length of time or duration that the outlet 24 remains open allowing the pressurized urea to be forced out of the outlet. In another way, the amount of urea fluid ejected is based on the number of ejected pulses of urea fluid; each pulse can have a relatively abbreviated and fixed duration. Other ways are possible, including a combination of the above two ways.

The ECU 20 electrically communicates with the pressure sensor 16, the SCR dosing injector 18, and the SCR fluid pump. In different embodiments, the ECU 20 could include multiple separate and discrete control units. Furthermore, the methods of operation described below can utilize various equations, calculations, formulae, mathematical relationships, and other functionality that can be performed by the ECU 20. As will be known by skilled artisans, the ECU 20 can have hardware, software, firmware, and other components configured and programmed to perform these functions, and can employ memory components, processing components, logic components, lookup tables, and other components when performing the functions. In one specific example, the timing for opening the SCR dosing injector 18 can be set and controlled via the ECU 20 and a lookup table. In FIG. 1, the ECU 20 is electrically coupled to the pressure sensor 16 via an electrical line 26, and receives the sensed pressure data therefrom. The ECU 20 is also electrically coupled to the SCR dosing injector 18 via an electrical line 28, and sends command actuation signals to the SCR dosing injector 18 thereby. The electrical lines can be electrical wires, cables, or other means of electrical communication.

In use, the sensed pressure data from the pressure sensor 16 can be used in three or more methods of operation of the SCR assembly 10, which can be performed separately, simultaneously, or in any combination with one another. In a first method of operation, the ECU 20 receives the sensed pressure data when and while the SCR dosing injector 18 is actuated to its open state and a pressure drop occurs in the SCR line 12. The pressure drop, or decreased pressure, is used to calculate and determine the volume or volumetric flow rate of urea fluid ejected out of the SCR dosing injector 18 when in the open state. The determination can also involve the diameter of the outlet 24 of the SCR dosing injector 18, and the diameter of the SCR line 12, among other possible variables, and can vary based on operating conditions. The ECU 20 then compares the determined volume or volumetric flow rate to a respective predetermined or intended volume or volumetric flow rate value. The predetermined values can be an acceptable and suitable value, and can be ascertained by experimentation or fixed by governmental regulations and directives. Operation of the SCR dosing injector 18 can then be adjusted based on the comparison. For example, if the determined volume or volumetric flow rate is less than the predetermined value, the SCR dosing injector 18 can be adjusted to increase the amount of urea fluid-and thus the volume-by increasing the duration that the outlet 24 remains open, by increasing the number of ejected pulses, both, or another way. Conversely, if the determined volume or volumetric flow rate is greater than the predetermined value, the SCR dosing injector 18 can be adjusted to decrease the amount of urea fluid by decreasing the duration that the outlet 24 remains open, by decreasing the number of ejected pulses, both, or another way.

In a second method of operation, the functionality of the SCR dosing injector 18 is monitored, and, particularly, malfunctions can be detected. For example, when and while the SCR dosing injector 18 is actuated to its open state, a pressure drop occurs. And when the SCR dosing injector 18 is in its closed state, the sensed pressure in the SCR line 12 returns to its baseline pressure value before the pressure drop occurred. If, for instance, the sensed pressure in the SCR line 12 does not return to the baseline pressure value within a certain time period after the SCR dosing injector 18 is no longer actuated to its open state and hence should be in the closed state, the ECU 20 can make the determination that the outlet 24 has undesirably and inadvertently remained at least partially in the open state. Corrective actions can then be taken to bring the outlet 24 to the closed state, and, if necessary, the OBD system can notify the vehicle operator of the malfunctioned condition. The reasons that the pressure in the SCR line 12 does not return to the baseline pressure value could include a partially open outlet 24. In another example, the pressure drop may not occur when and while the SCR dosing injector 18 is in its open state because an obstruction may be blocking the ejection of urea out of the SCR dosing injector. For instance, a chemical reaction may take place downstream the SCR dosing injector 18 and in the exhaust stream and may produce a solid matter that physically blocks ejected urea. In this example, if the pressure sensor 16 does not sense an expected pressure drop upon opening the SCR dosing injector 18, the ECU 20 can make the determination that an obstruction is indeed blocking the outlet 24.

In a third method of operation, the sensed pressure can be used to assist operation of the SCR system pump. For example, the baseline pressure value can represent a desired and suitable pressure value to be maintained in the SCR line 12. If, when the SCR dosing injector 18 is in its closed state, the sensed pressure is less than the baseline pressure value, the ECU 20 can command the operation of the SCR system pump in order to increase the sensed pressure and bring it to the baseline pressure value. Conversely, if the sensed pressure is greater than the baseline pressure value, the SCR system pump can be commanded to decrease the sensed pressure and bring it to the baseline pressure value.

In at least some of the above methods of operation, the absolute pressure sensor and its ability to take instantaneous and dynamic pressure measurements facilitates the performance of the methods.

Referring to FIG. 2, an experiment was performed on an SCR assembly similar to the SCR assembly 10 of FIG. 1 including an SCR line, a flow restrictor, a pressure sensor, and an SCR dosing injector. The flow restrictor in the experiment was an orifice with a diameter of approximately 0.221 mm, and the SCR dosing injector was operated at an approximately 6% duty cycle. The graph of FIG. 2 shows the pressure sensed by the pressure sensor on the y-axis in kilopascals, and shows the time on the x-axis in milliseconds. Referring to the graph, at approximately 50 milliseconds the SCR dosing injector was actuated to its open state, as shown by a step S in an injector control line L₁. Concurrently, a pressure drop D of approximately 47 kPa can be observed in a sensed pressure line L₂. Upon bringing the SCR dosing injector to its closed state, the sensed pressure line L₂ returns to a baseline pressure value of approximately 497 kPa. Skilled artisans will appreciate that not all experiments will yield the exact data shown in the graph of FIG. 2.

The overall flow resistance of the SCR assembly 10 from the SCR fluid pump and to the SCR dosing injector 18 is the sum of the individual flow resistance values of all the components in the assembly, such as those of the SCR line 12, the flow restrictor 14, the SCR dosing injector 18, and of other components, if provided, like connectors and valves. The overall flow resistance determines the pressure drop in the steady state flow of the system. The difference between the overall flow resistance of the SCR assembly 10 and the individual flow resistance of the flow restrictor 14 determines the variation of a pressure signal (i.e., pressure drop D in FIG. 2) when the SCR dosing injector 18 is actuated from its closed state to its open state. In some cases, it may be desirable to select or design an increased individual flow resistance of the flow restrictor 14 in order to facilitate detection of a malfunction and distinguish the malfunction from normal operation.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A method of operating a selective catalytic reduction (SCR) assembly, the method comprising the steps of:
providing a flow restrictor in an SCR line of the SCR assembly, said flow restrictor located upstream of an SCR injector relative to reducing agent fluid-flow direction in the SCR line, and providing a pressure sensor at the SCR line, said pressure sensor located downstream of said flow restrictor and upstream of the SCR injector relative to reducing agent fluid-flow direction in the SCR line;
sensing the pressure of the reducing agent in the SCR line with said pressure sensor when the SCR injector is actuated; and
using the sensed pressure in order to do one or both of: a) monitor the functionality of the SCR injector, and b) determine an amount of reducing agent ejected out of the SCR injector when the SCR injector is actuated.

2. The method of operating a selective catalytic reduction (SCR) assembly of claim 1, wherein monitoring the functionality of the SCR injector comprises detecting a malfunctioned opening of an outlet of the SCR injector.

3. The method of operating a selective catalytic reduction (SCR) assembly of claim 1, wherein monitoring the functionality of the SCR injector comprises detecting the presence of an obstruction located downstream of the SCR injector.

4. The method of operating a selective catalytic reduction (SCR) assembly of claim 1, further comprising the step of comparing the determined amount to a predetermined amount of reducing agent.

5. The method of operating a selective catalytic reduction (SCR) assembly of claim 4, further comprising the step of selectively adjusting operation of the SCR injector based upon said comparison step.

6. The method of operating a selective catalytic reduction (SCR) assembly of claim 1, further comprising the step of using the sensed pressure as at least one bases for controlling operation of an SCR fluid pump used to pressurize reducing agent in the SCR line.

7. The method of operating a selective catalytic reduction (SCR) assembly of claim 1, further comprising the step of using the sensed pressure in order to determine a volume or volumetric flow rate of reducing agent ejected out of the SCR injector when the SCR injector is actuated, and using the sensed pressure as at least one bases for controlling operation of an SCR fluid pump used to pressurize reducing agent in the SCR line.

8. A selective catalytic reduction (SCR) assembly, comprising:
an SCR line constructed to carry reducing agent fluid-flow;
a flow restrictor located in said SCR line; and
a pressure sensor located at said SCR line to sense the pressure of the reducing agent flowing through said SCR line, said pressure sensor positioned downstream of said flow restrictor relative to reducing agent fluid-flow direction in said SCR line;
wherein, during use of the SCR assembly, the sensed pressure is used in order to detect a malfunctioned opening of an outlet of an SCR injector, detect the presence of an obstruction located downstream of the SCR injector, or to detect both.

9. The selective catalytic reduction (SCR) assembly of claim 8, further comprising an SCR injector located in said SCR line and ejecting reducing agent into an exhaust stream during use of the SCR assembly, said SCR injector positioned downstream of said pressure sensor relative to reducing agent fluid-flow direction in said SCR line.

10. The selective catalytic reduction (SCR) assembly of claim 9, further comprising an electronic control unit (ECU) electrically coupled to said pressure sensor in order to receive input indicative of the sensed pressure, and electrically coupled to said SCR injector in order to control operation of said SCR injector.

11. The selective catalytic reduction (SCR) assembly of claim 8, wherein said flow restrictor is an orifice.
